# FASCICULE DE BREVET EUROPEEN

(11) **EP 3 609 821 B1**
(45) Date de publication et mention de la délivrance du brevet: **29.07.2026**
(21) Numéro de dépôt: 18720322.9
(22) Date de dépôt: 11.04.2018
(51) Int. Cl.: B65G 47/08, B65G 47/26

(54) **TRANSFERT MULTILIGNES DE PRODUITS**
MEHRLINIENTRANSFER VON PRODUKTEN
MULTILINE TRANSFER OF PRODUCTS

(30) Priorité: 11.04.2017 FR 1753137; 07.06.2017 FR 1755064
(43) Date de publication de la demande: 19.02.2020
(73) Titulaire: SIDEL PARTICIPATIONS, 76930 Octeville-sur-Mer (FR)
(72) Inventeur: BERGER, Julien, 67116 Reichstett (FR); PETROVIC, Zmaj, 67116 Reichstett (FR)
(74) Mandataire: Sidel Group
(86) Numéro de dépôt international: PCT/FR2018/050912
(87) Numéro de publication internationale: WO 2018/189485

(56) Documents cités:
- EP-A1- 0 613 838
- EP-A1- 2 810 878
- WO-A1-2007/115085
- WO-A1-2012/117008
- KR-U- 20090 005 792

## Description

La présente invention entre dans le domaine de la manutention et du convoyage de produits.

De tels produits sont des contenants, de type bouteilles, flacons ou bidons.

L'invention concerne plus particulièrement un dispositif de convoyeur de produits et un procédé de convoyage de produits.

Le document WO 2012/117008 A1 divulgue un dispositif de convoyeur selon le préambule de la revendication 1.

De manière connue, le long d'une ligne de production et/ou de conditionnement, les produits sont généralement acheminés d'un point à un autre au moyen de dispositifs de convoyage à bande, assurant le transport desdits produits, seul, à l'unité, en vrac, par lots ou autres, depuis une zone vers une autre, au travers de différents modules où lesdits produits sont traités.

A cet effet, un tel dispositif de convoyeur comporte une surface de réception desdits produits, se présentant généralement sous la forme d'une bande sans fin s'enroulant, à une extrémité longitudinale dudit dispositif, autour d'un rouleau motorisé d'entraînement et, à l'extrémité opposée, autour d'un rouleau de renvoi. La vitesse de déplacement de la bande est donc contrôlée par la vitesse de rotation dudit rouleau d'entraînement.

Actuellement, une problématique de convoyage réside dans l'approvisionnement continu en produits d'un module situé en aval dudit convoyeur, en déplaçant lesdits produits depuis une zone de chargement ou un autre module situé en amont, où les produits sont accumulés et transférés par groupe de façon cyclique depuis ladite zone ou ledit module amont jusque sur la surface de réception dudit convoyeur. L'invention concerne un tel transfert de produits s'opérant toujours essentiellement transversalement par rapport à la direction d'avance dudit convoyeur, à savoir selon une direction qui lui est orthogonale ou sensiblement orthogonale depuis ladite zone de chargement ou ledit module amont vers la surface de réception. En d'autres termes, les produits du groupe transféré sont amenés sur la bande du convoyeur en traversant au moins un bord latéral dudit convoyeur.

En particulier, ce transfert d'un groupe de produits doit préférablement se faire sans en modifier l'ordonnancement, qui, préférablement, est celui d'une matrice sans quinconce. En d'autres termes, l'agencement des produits doit être conservé au moment de leur transfert, depuis la zone de stockage ou le module amont jusque sur ledit convoyeur, ce sous forme d'un groupe s'étendant sous forme d'un segment longitudinal dans la direction d'avance du convoyeur, voire de plusieurs tels segments l'un à côté de l'autre dans une direction transversale à l'avance du convoyeur.

Une contrainte réside donc dans l'approvisionnement en continu du module aval, selon une vitesse nominale et donc un débit qui dépend du module en question, alors que le chargement du convoyeur s'effectue de façon discontinue, en particulier à chaque cycle avec un groupe de produits qui s'étend longitudinalement sur toute la longueur de la zone de chargement, sous la forme de plusieurs segments longitudinaux parallèles entre eux et répartis transversalement à la vitesse d'avance du convoyeur.

A titre d'exemple, un groupe de produits transférés simultanément peut consister en un regroupement selon une matrice souvent de forme parallélépipédique carrée ou rectangle. Le transfert de ce groupe en conservant sa disposition et sans risquer de faire tomber les produits requiert un temps durant lequel la vitesse dudit convoyeur doit être diminuée, voire arrêtée, afin d'éviter tout changement de disposition des produits au sein du groupe transféré, qui serait induit par les frottements des produits, notamment de leur embase en contact inférieurement, au moment du passage depuis la surface de la zone de chargement ou dudit module amont vers la surface de réception de la bande du convoyeur. Ce délai pendant lequel le convoyeur est entraîné à une vitesse réduite, voire est immobile, impacte l'approvisionnement du module aval, qui doit impérativement rester continu, sous peine d'interrompre la production.

Une solution largement déployée consiste à séparer le dispositif en au moins deux convoyeurs successifs entraînés à des vitesses différentes. Un premier convoyeur amont se situe en sortie de la zone de chargement ou du module amont et est entraîné à une vitesse moindre. Cette vitesse momentanément très faible permet d'assurer le transfert des produits en minimisant les risques de changement de position, voire de chute. Un second convoyeur se situe en aval, en sortie dudit premier convoyeur et approvisionne le module aval avec une vitesse continue. De plus, afin d'assurer l'approvisionnement continu, ledit premier convoyeur s'étend selon une longueur permettant le déplacement simultané de plusieurs groupes de produits. Ainsi, bien qu'entraîné à une vitesse moindre, il permet d'acheminer une quantité requise de produits vers le second convoyeur, tout en conservant ladite continuité d'approvisionnement.

Un inconvénient réside toutefois au niveau de la jonction entre lesdits premier et second convoyeurs, formant un creux globalement triangulaire, aux bords arrondis convexes du fait de l'enroulement autour de leur rouleau respectif, avec un espacement au niveau de la pointe inférieure. Ce creux peut entraîner le blocage de la partie inférieure d'un produit et son changement de position, rompant l'ordonnancement de la matrice à respecter. Même en diminuant le diamètre des rouleaux, afin de diminuer la courbure et l'espacement, il n'est pas possible de combler entièrement ce creux, qui déstabilise les produits parfois jusqu'à la chute.

Une solution consiste à recouvrir le creux au moyen d'une plaque morte, sur et le long de laquelle lesdits produits vont glisser lors de leur passage depuis le premier convoyeur vers le second. Toutefois, le déplacement des produits sur cette plaque s'effectue uniquement par poussée des autres produits véhiculés par le premier convoyeur. Il en résulte derechef une possible modification de la disposition du lot de produits, voire une possible chute desdits produits. En outre, la poussée des produits les uns au contact des autres peut provoquer leur déformation par compression, notamment en raison de leur forme et de l'élasticité du matériau les constituant, par exemple souvent des bouteilles globalement cylindriques en matériau plastique flexible. En outre, le passage par une plaque morte reste une source d'instabilité incompatible avec des grandes cadences.

Il existe donc une réelle nécessité d'apporter une solution aux mécanismes existants permettant, d'une part, d'assurer l'approvisionnement en continu indispensable d'un module situé en aval, tout en permettant, d'autre part, de conserver le positionnement en matrice ordonnée des produits formant le groupe lors de son transfert depuis une zone de chargement ou un module situé en amont jusqu'audit module aval.

L'invention a pour but de pallier les inconvénients de l'état de la technique en proposant un dispositif de convoyeur dont la surface de réception des produits est formée par au moins deux sections indépendantes, à savoir que leur vitesse d'entraînement respective peut être commandée de façon distincte l'une de l'autre, les deux sections étant dans le prolongement l'une de l'autre et mobiles l'une par rapport à l'autre. De plus, les vitesses sont prévues variables afin au moins d'autoriser, d'une part, l'arrêt d'une première section le temps d'y charger les produits depuis la zone de chargement ou le module amont, alors que l'autre section continue de progresser le long dudit dispositif à la vitesse nominale d'approvisionnement du module aval, et, d'autre part, l'accélération progressive de ladite première section précédemment à l'arrêt, pour atteindre une vitesse supérieure à ladite autre section, jusqu'à ce qu'elle la rejoigne, repassant à une vitesse équivalente à la vitesse nominale d'approvisionnement du module aval, assurant alors la continuité d'approvisionnement en produits.

De façon similaire, une fois que les produits portés par l'autre section ont tous été délivrés au module aval, la vitesse de ladite autre section est accélérée en vue de retourner à la position de chargement située au niveau de ladite zone de chargement ou du module amont, tandis que la première section conserve sa vitesse d'approvisionnement des produits au niveau du module aval.

Pour ce faire, un tel dispositif de convoyeur présente, en vis-à-vis de l'alimentation du module aval, une bande séparée en au moins deux sections indépendantes l'une dans le prolongement de l'autre, chaque section étant montée solidaire de moyens autonomes de motorisation. Les deux sections circulent sur le même trajet fermé, convoient les produits sur un même tronçon et circulent sur un même tronçon pour leur retour. Elles interviennent tour à tour et leur espacement peut changer, pour ménager des vitesses respectives différentes, associées notamment à une réception de produits et à un déchargement de produits.

L'aspect sans fin du trajet de chaque section est par exemple assuré au travers de moyens d'enroulement s'étendant intérieurement entre un rouleau d'entraînement et un rouleau de renvoi constituant lesdits moyens de motorisation, assurant à chaque section qu'elle puisse cheminer en boucle fermée tout le long du circuit constitué par ledit convoyeur. D'autres technologies de déplacement en boucle fermée sont envisageables.

L'invention consiste en un dispositif de convoyeur selon la revendication 1, comprenant une surface de réception de produits s'étendant au moins en partie longitudinalement, le long d'un trajet en boucle fermée, dans lequel
- ladite surface de réception comporte au moins une première section et une seconde section indépendantes ;
- ladite première section s'étendant selon une première partie de la longueur de ladite surface, entraînée au travers de premiers moyens de motorisation;
- ladite seconde section s'étendant selon une seconde partie de la longueur de ladite surface, distincte de ladite première partie, entraînée au travers de seconds moyens de motorisation.

Selon d'autres caractéristiques additionnelles possibles, non limitatives :
- lesdits premiers moyens de motorisation peuvent se présenter sous forme d'au moins un premier rouleau d'entraînement et d'au moins un rouleau de renvoi, ladite première section comprenant des premiers moyens d'enroulement au niveau d'une première extrémité au moins autour dudit premier rouleau d'entraînement et au niveau d'une seconde extrémité au moins autour dudit rouleau de renvoi.
- lesdits seconds moyens de motorisation peuvent comprendre au moins un second rouleau d'entraînement, ladite seconde section comprenant des seconds moyens d'enroulement au niveau d'une de ses extrémités au moins autour dudit second rouleau d'entraînement.
- lesdits seconds moyens d'enroulement de ladite seconde section peuvent être montés en enroulement autour dudit rouleau de renvoi des premiers moyens de motorisation.- lesdits premier et second moyens d'enroulement peuvent se présenter sous la forme d'au moins une courroie en prise réciproquement avec ledit premier rouleau d'entraînement et ledit second rouleau d'entraînement, chaque courroie étant solidaire en partie intérieure respectivement d'une des sections.

L'invention concerne aussi un procédé de convoyage de produits selon la revendication 6. Un tel procédé prévoit spécifiquement l'arrêt ou quasi arrêt momentané d'une première section d'un dispositif de convoyeur selon l'invention, tandis que l'autre section est en déplacement, puis l'accélération de cette première section jusqu'à une vitesse à même de lui permettre de rejoindre ladite autre section, à savoir l'aboutement de l'extrémité aval de la première section avec l'extrémité amont de ladite autre section, alors que cette dernière alimente le module aval en produits.

Plus précisément, ledit procédé, dans lequel lesdits produits sont disposés selon une position ordonnée, consiste à convoyer lesdits produits depuis une zone de chargement ou un module situé en amont, vers un module situé en aval, au travers d'une surface de réception.

L'invention consiste donc aussi en un procédé de convoyage de produits, dans lequel lesdits produits sont agencés selon une position ordonnée, consistant à :
- convoyer lesdits produits depuis une zone de chargement ou un module situé en amont, vers un module situé en aval, au travers d'une surface de réception ;
caractérisé en ce que :
- la surface de réception comprend une première section et une seconde section entraînées indépendamment ;
- on arrête ladite première section au niveau de ladite zone de chargement ou du module amont et on transfère lesdits produits depuis ladite zone de chargement ou ledit module amont, tandis que ladite seconde section est entraînée à une vitesse donnée et assure le déchargement des produits au niveau dudit module aval ;
- on accélère ladite première section jusqu'à une vitesse supérieure à ladite vitesse donnée de ladite seconde section, jusqu'à ce que l'extrémité aval de ladite première section atteigne l'extrémité amont de ladite seconde section.

En d'autres termes :
- ladite surface de réception comprend une première section et une seconde section entraînées indépendamment et qui se suivent dans la direction longitudinale d'avance ;
- on peut arrêter ladite première section au niveau de ladite zone de chargement ou du module amont et on transfère transversalement par rapport à l'avance des sections, lesdits produits depuis ladite zone de chargement ou ledit module amont, tandis que ladite seconde section alimente le module aval en produits et se déplace pour ce faire à une autre vitesse, qui dépend préférablement de ce dernier ;
- une fois chargée, on peut accélérer ladite première section jusqu'à ce que l'extrémité aval de ladite première section rejoigne l'extrémité amont de ladite seconde section ;
- une fois que les produits de la deuxième section ont tous été alimentés, on peut alimenter le module aval avec les produits de la première section, qui suit la deuxième, et ainsi de suite.

Selon d'autres caractéristiques additionnelles possibles, non limitatives :
- lorsque la seconde section atteint la première, on peut décélérer ladite première section jusqu'à ladite vitesse de ladite seconde section.
- il peut comprendre une étape d'alimentation du module en aval par l'arrivée successive et en continue des sections.
- après déchargement des produits au niveau dudit module aval par ladite seconde section, on peut entraîner rapidement la seconde section au moins le long du retour jusqu'à ladite zone de chargement ou le module amont et on arrête alors ladite seconde section.
- on peut transférer transversalement un groupe de produits, depuis ladite zone de chargement vers l'une desdites sections, ledit groupe présentant au moins un voire au moins deux segments longitudinaux comprenant chacun plusieurs produits, et éventuellement faire circuler ensuite les produits dans des couloirs longitudinaux séparés délimités par des parois.

Dès lors, un seul dispositif, avec un procédé de convoyage dédié, permet de remplacer plusieurs convoyeurs successifs, limitant les coûts, l'empattement et l'infrastructure de la ligne de production et/ou de conditionnement.

Selon ce procédé, chaque section assure la succession d'une réception de produits à vitesse très lente voire à l'arrêt, d'un dégagement, d'une alimentation de produits à vitesse fixée par le module alimenté en produits, et d'un retour. Les sections exécutent leurs cycles en même temps, et, à tout moment, chacune se trouve à une étape différente.

La présente invention trouvera une application préférentielle, mais aucunement limitative, dans le convoyage de produits ordonnés selon une matrice parallélépipédique carrée ou rectangle, sans quinconce.

Le groupe transféré prenant la forme de plusieurs segments longitudinaux côte à côte, ledit transfert se fait préférablement avec une plaque de poussée pour chaque segment, voir une paire de plaques entre lesquelles s'étend le segment, ce qui est rendu possible par l'absence de quinconce. Les plaques peuvent ainsi être toutes montées sur un même outil, l'une après l'autre dans la direction dans laquelle s'accumulent les segments correspondants et contribuent à éviter l'apparition d'une quinconce.

De plus, l'invention pourra s'intégrer au sein d'une ligne de production depuis une zone de chargement de produits, notamment dédiée à une accumulation desdits produits déjà ordonnés ou au sein de laquelle lesdits produits sont ordonnés, vers un module aval dont l'entrée accueille lesdits produits dans au moins un, mais de préférence, plusieurs couloirs d'introduction au sein dudit module aval. En outre, ce dernier peut avantageusement être un module de type fardeleuse à même d'opérer une étape de fardelage des lots de produits en fardeaux. Il peut s'agir d'une encaisseuse, d'un palettiseur, etc.

D'autres caractéristiques et avantages de l'invention ressortiront de la description détaillée qui va suivre des modes de réalisation non limitatifs de l'invention, en référence aux figures annexées dans lesquelles :
- la figure 1 représente schématiquement une vue de dessus d'un exemple de mise en œuvre de l'invention au sein d'une ligne de production, montrant tout particulièrement les deux sections séparées de la surface de réception des produits au niveau d'un dispositif de convoyage ;
- la figure 2 représente schématiquement une vue de côté de la figure 1, montrant une première étape avec la première section située à l'arrêt au niveau d'une zone de chargement et la seconde section en déchargement au niveau d'un module aval ; et
- les figures 3 à 5 représentent schématiquement des vues de côté similaires à la figure 2 de plusieurs étapes successives, montrant un exemple des déplacements respectifs des première et seconde section ;

- la figure 6 représente schématiquement une vue en perspective de trois-quart d'un mode de réalisation d'un dispositif de convoyeur selon l'invention, dans une première position de déplacement des premières et seconde sections, montrant globalement l'entraînement des première et seconde sections au travers de courroies distinctes ;
- la figure 7 représente schématiquement une vue de détail de la figure 6, montrant spécifiquement l'entraînement des sections à une extrémité du dispositif de convoyeur ; et
- les figures 8 à 10 représentent schématiquement une vue de dessus d'un exemple de mise en œuvre de l'invention au sein d'une ligne de production, montrant tout particulièrement plusieurs étapes successives de convoyage de produits depuis une zone de chargement vers un module aval.

La présente invention concerne tout d'abord un dispositif de convoyeur 1 de produits 2 selon la revendication 1.

Un tel dispositif 1 s'intègre au sein d'une ligne de production et/ou de conditionnement desdits produits 2. Plus particulièrement, il assure le transport en déplacement des produits entre deux emplacements de ladite ligne, depuis une zone de chargement 3 ou un module situé en amont vers un module en aval 4. Selon le mode préférentiel de réalisation, représenté sur les figures, le convoyeur 1 s'étend longitudinalement depuis contre ladite zone de chargement 3 jusqu'à déboucher dans plusieurs couloirs distincts à l'entrée d'un module aval 4, ce dernier pouvant être, notamment de type fardeleuse.

On notera que le dispositif de convoyeur 1 selon l'invention est positionné par rapport à ladite zone de chargement 3 ou le module amont, de sorte que les produits 2 sont transférés transversalement réciproquement de l'un vers l'autre.

Le convoyeur 1 avance donc dans une direction longitudinale. Les produits 2 y sont amenés sous forme d'un groupe 5 vers la surface dudit convoyeur 1, avec un mouvement perpendiculaire horizontal et donc transversal, depuis la zone de chargement 3, qui peut notamment être mobile transversalement pour amener en permanence les nouveaux produits 2 au plus près du convoyeur 1.

Comme énoncé précédemment, lesdits produits 2 constituent un groupe 5 et peuvent ensuite être encore regroupés par lots en vue de leur fardelage par exemple.

Un tel groupe 5 s'étend de manière à transférer une ou plusieurs lignes de produits en une seule fois vers le convoyeur 1. En outre, le module aval 4 de fardeleuse permet de recevoir les produits 2 en vue de les filmer par lot et les maintenir, au travers d'une opération de fardelage, transformant des lots en fardeaux lors de cette opération. Cet approvisionnement doit s'effectuer à une vitesse nominale, dépendant de la cadence du module aval, ou fardeleuse, sans causer de rupture ou d'espacement entre les produits acheminés par ledit convoyeur 1. A cet effet, le convoyeur 1 transporte donc les produits 2, organisés en matrice sans quinconce, jusqu'à une entrée 40 dudit module aval 4. A ce niveau, ce dernier comporte un transporteur 41 assurant le déplacement des produits en vue de leur traitement et de leur acheminement vers la suite de la ligne de production et/ou de conditionnement. Préférablement, un groupe 5 de produits 2 s'étend longitudinalement d'un bord à l'autre de la zone de chargement, et aussi transversalement sur une ou deux lignes de produits 2, voire plus.

Il est possible d'utiliser un cycleur-pousseur pour assurer le transfert depuis la zone de chargement 3 vers le convoyeur 1.

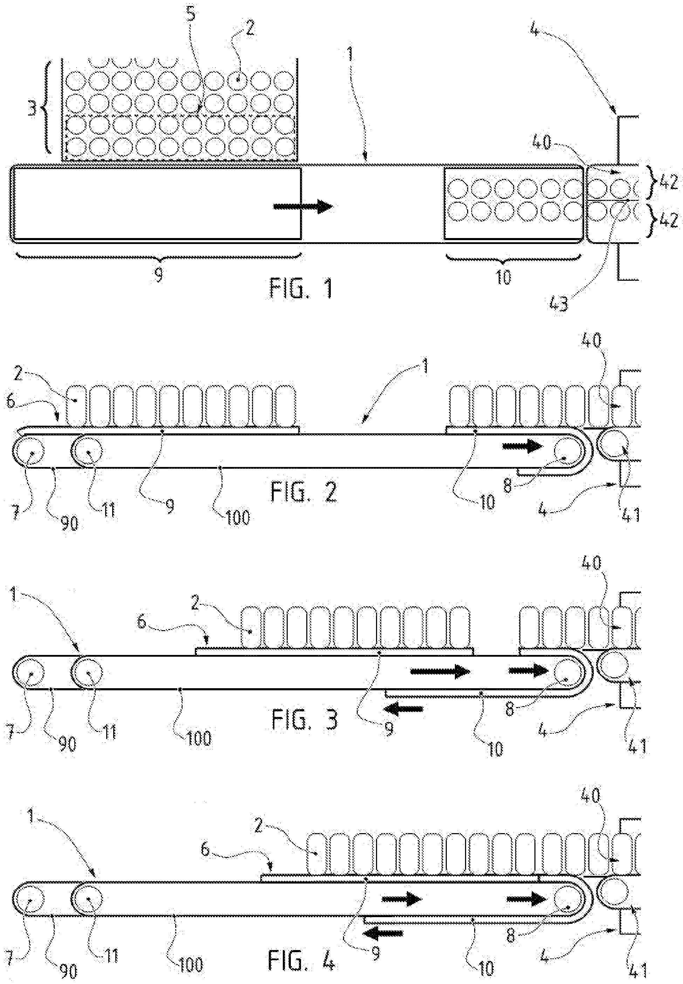

En outre, selon l'exemple visible sur la figure 1, le module aval 4 reçoit les produits et les guide dans deux couloirs 42, séparés par un rail de guidage 43. Ce nombre de couloirs 42 dépend de la taille de la matrice du lot de produits 2, chaque couloir 42 étant séparé d'un autre couloir adjacent par l'intermédiaire d'un rail 43 ou une paroi.

Afin d'assurer le déplacement des produits 2 le dispositif de convoyeur 1 comprend une surface de réception 6 desdits produits 2. Cette surface 6 reçoit généralement les produits 2 en appui au niveau de leur face inférieure, à savoir leur fond. Des moyens de guidage, non représentés, peuvent être disposés sur les bords afin de canaliser lesdits produits lors du déplacement dudit convoyeur 1.

On notera que la largeur de la surface de réception 6 peut être dimensionnée en fonction de la taille et du nombre de produits 2 à recevoir. En particulier, une fois disposé sur cette surface 6, un groupe 5 de produits 2 peut occuper toute la largeur de ladite surface de réception 6.

De façon générale, le transfert des produits 2 depuis la zone de chargement 3 jusque sur la surface de réception 6 se fait simultanément par balayage horizontal transversal pour une pluralité de produits 2, qui forme au moins un segment longitudinal complet de la zone de chargement 3, préférablement plusieurs. Ce au moins un segment s'étend depuis le produit 2 le plus en amont jusqu'au produit 2 le plus en aval sur la zone de chargement 3 dans la direction longitudinale d'avance du dispositif de convoyeur 1.

Comme il a été évoqué, les produits sont transférés par poussée transversale, préférablement par une surface qui s'étend longitudinalement. Sa longueur, dans le sens de déplacement du convoyeur, défini ainsi le nombre de produits présents sur la zone de chargement 3 dans la direction longitudinale. Lors du transfert de produits depuis la zone de chargement 3 jusque sur la surface de réception 6, on déplace simultanément l'intégralité d'au moins un tronçon longitudinal. La section 9, 10 qui reçoit les produits a préférablement une dimension longitudinale très proche du au moins un tronçon qu'elle reçoit. Autrement dit, la dimension longitudinale de chaque section 9, 10, correspond essentiellement à la dimension longitudinale de l'outil qui y amène les produits, cette dimension correspondant éventuellement essentiellement aussi à la dimension longitudinale de la zone de chargement 3, voire même d'un outil encore amont qui aurait initialement alimenté en produits la zone de chargement 3 par poussée transversale.

Ladite surface de réception 6 s'étend au moins en partie longitudinalement, circule ; pour son retour ; en enroulement au niveau d'une première extrémité, par exemple autour de moyens d'entraînement sous forme d'au moins un premier rouleau d'entraînement 7 et au niveau d'une seconde extrémité autour d'au moins un rouleau de renvoi 8. Ainsi, l'actionnement en rotation dudit premier rouleau 7 induit l'entraînement de la surface de réception 6 et le déplacement des produits 2. Le sens de déplacement de cette surface 6 est modélisé par une flèche sur la figure 1, sans induire une quelconque relation de vitesse par rapport à la taille de cette flèche.

Avantageusement, le dispositif de convoyeur 1 se caractérise par le fait que ladite surface de réception comporte au moins une première section 9 et une seconde section 10 indépendantes, l'une dans le prolongement de l'autre, dans leur direction d'avance. La surface de réception 6 est donc divisée longitudinalement en au moins deux portions, à savoir selon la direction d'entraînement et de circulation des produits que le convoyeur 1 transporte. En d'autres termes, les sections 9 et 10 peuvent être commandées de façon distincte, en particulier concernant leur entraînement respectif et donc leur vitesse de progression. Préférablement, la dimension longitudinale tant de la première section 9 que de la deuxième section 10 correspond essentiellement à la dimension longitudinale du groupe 5 transféré, qui correspond généralement à la dimension longitudinale de la zone de chargement 3.

On notera que le dispositif 1 peut comporter des sections supplémentaires, subdivisant la surface de réception 6, lesdites sections supplémentaires étant prévues indépendantes ou asservies à l'une ou à l'autre des première 9 et seconde 10 sections.

Chaque section 9,10 est constituée par une bande ou tapis, de longueur finie, notamment en un matériau adapté, comme un composé plastique. Possiblement, la section présente des caractéristiques élastiques, autorisant notamment sa compression localement. Ainsi, lorsque les sections 9,10 sont aboutées, la jonction entre les bandes ou tapis, opérée par compression, assure une liaison sans creux ni écartement.

La longueur de chaque section 9,10 est préférentiellement identique. En outre, cette longueur correspond à la dimension de la portion de transfert des produits 2 de la zone de chargement 3 ou du module amont 4, à savoir qu'elle est préférablement égale à la dimension de cette portion. Cela assure que l'intégralité d'un segment de produits 2 présents au niveau de ladite zone 3 peut être transférée vers la section 9,10 située en vis-à-vis, sans pour autant créer un espace significatif entre les produits les plus en amont sur la section 9, 10 aval et les produits les plus en aval sur la section 10, 9 amont.

D'autre part, ladite seconde section 10 s'étend selon une seconde partie de la longueur de ladite surface 6, distincte de ladite première partie 9, supportée au travers de seconds moyens d'enroulement 100 au moins autour d'un second rouleau d'entraînement 11. Dès lors, lesdites sections 9,10 s'étendent l'une derrière l'autre, s'enchaînant avec un écartement variable entre elles, qui est contrôlé en fonction de leur position respective.

Comme visible sur le mode de réalisation représenté sur les figures 2 à 5, les rouleaux d'entraînement 7,11 de chaque section 9,10 peuvent être disposés dans un même plan horizontal, préférablement espacés l'un par rapport à l'autre. Dès lors, l'une des sections 9 circule sur une boucle de longueur supérieure à celle de l'autre section 10, du fait que son rouleau d'entraînement 7 est situé de façon déportée par rapport à l'autre rouleau d'entraînement 11. Les vitesses de déplacement de cette section 9, avec un rouleau d'entraînement 7 plus loin, sont donc adaptées. Les sections 9,10 présentent des configurations d'entraînement, en vitesses comme en accélérations et décélérations, spécifiques l'une par rapport à l'autre.

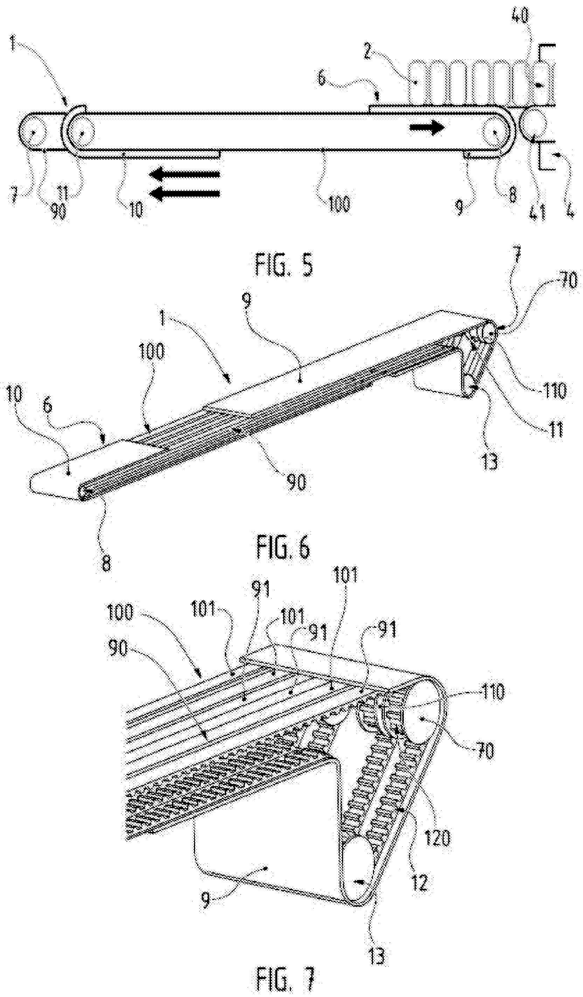

Selon un autre mode de réalisation, représenté sur les figures 6 et 7, les rouleaux d'entraînement 7,11 des sections 9,10 peuvent être disposés de façon coaxiale, étant alors constitués respectivement par au moins une roue d'entraînement 70,110. Chaque rouleau d'entraînement 7,11 peut être constitué de plusieurs roues d'entraînement 70,110, montées coaxiales entre elles.

En outre, selon ce mode spécifique non limitatif, des rouleaux d'entraînement 7,11 peuvent être multiples. Comme visible sur les figures 6 et 7, un premier rouleau d'entraînement est situé en une extrémité située en aval, tandis qu'un rouleau d'entraînement complémentaire 13 est déporté inférieurement. Cette configuration assure notamment une meilleure tension de l'ensemble du tapis du dispositif de convoyeur 1, tout en améliorant l'entraînement, en particulier lors d'accélération ou décélération de tout ou partie dudit tapis.

De plus, dans cette configuration, comme visible sur la figure 6, les moyens d'entraînement peuvent comprendre un unique rouleau de renvoi 8, situé à l'extrémité opposée du ou des rouleaux d'entraînement 7,11. Les sections 9,10 viennent alors s'enrouler autour de ce même rouleau de renvoi 8.

Ainsi, chaque section 9,10 est entraînée selon ses propres moyens, selon des vitesses pouvant être identiques ou différentes l'une par rapport à l'autre, offrant la possibilité de faire varier les vitesses d'entraînement des rouleaux 7,11 afin d'adapter la vitesse de chaque section 9,10 aux besoins spécifiques de la production et des modules aval et amont entre lesquels le dispositif de convoyeur 1 selon l'invention transporte les produits 2.

En particulier, la longueur du dispositif de convoyeur 1 peut être adaptée, d'une part, en fonction de l'emprise possible entre la zone de chargement 3 ou le module amont et le module aval 4, ou, d'autre part, en fonction de la vitesse nominale d'approvisionnement dudit module 4 et de la cadence possible de chargement par rapport aux nombres de produits 2 au niveau de la zone 3, ou, d'autre part encore, en fonction de la distance à couvrir par l'une et l'autre des sections au regard, notamment de ladite vitesse nominale d'approvisionnement. Plus précisément, la longueur du dispositif de convoyeur 1 peut être déterminée pour obtenir une accélération suffisante et sécurisée d'une section (i.e. assurant la conservation de l'agencement des produits 2 chargés et évitant les basculements) jusqu'à rattraper l'autre section, en fonction des vitesses qu'il est possible d'atteindre et de la distance à parcourir, tout en conservant la continuité en approvisionnement.

Préférentiellement, lesdits seconds moyens d'enroulement 100 de ladite seconde section 10 peuvent être montés en enroulement autour dudit rouleau de renvoi 7, comme visible sur les figures 2 à 5, ou bien autour de leur propre rouleau de renvoi, non représenté, ou encore autour d'un rouleau de renvoi distinct mais aligné avec ledit rouleau de renvoi 7 (en d'autres termes, prévus coaxiaux selon la largeur dudit dispositif 1). En outre, chaque rouleau de renvoi 7 peut être prévu libre en rotation, assurant la tension des moyens 90,100 en enroulement autour et le libre déplacement de leur section 9,10 respective. Selon le mode de réalisation représenté sur les figures, le rouleau de renvoi 7 est situé à l'extrémité du convoyeur 1 à l'opposé du module aval 4.

On notera que les sections 9,10 peuvent partager ou avoir leurs propres rouleaux intermédiaires, non représentés, situés entre leur rouleau d'entraînement 7,11 et le rouleau de renvoi 8. Ces rouleaux intermédiaires permettent de supporter les sections 9,10 lors de leur passage, ainsi que leurs moyens d'enroulement 90,100 respectifs, maintenant leur tension.

De façon plus précise, selon un mode préférentiel de réalisation, lesdits premier 90 et second 100 moyens d'enroulement peuvent se présenter sous la forme d'au moins une courroie en prise réciproquement avec ledit premier rouleau d'entraînement 7 et ledit second rouleau d'entraînement 11. L'entraînement s'opère alors par friction autour des rouleaux d'entraînement 7,11, ou encore par engrènement si la courroie est prévue avec une denture correspondante.

Selon le mode de réalisation spécifique visible sur la figure 7, l'entraînement peut s'opérer par engrènement autour des rouleaux d'entraînement 7,11. Dès lors, chaque courroie 91,101 est prévue avec une denture 12 correspondante. De plus, préférentiellement, comme évoqué précédemment, lesdits premiers 7 et seconds 11 rouleaux d'entraînement peuvent présenter réciproquement au moins une première roue d'entraînement 70 et au moins une seconde roue d'entraînement 110, ces dernières présentent alors une denture complémentaire 120 correspondant à la denture 12 des courroies 91,101, assurant la prise en engrènement.

De préférence, les courroies 91,101 reliées à chaque section 9,10 peuvent être au nombre d'au moins deux, notamment trois, voire quatre, espacées parallèlement et s'étendant selon des plans essentiellement verticaux s'étendant selon la longueur du dispositif 1, assurant la stabilité latérale de chaque section 9,10 qui y est accrochée. Dès lors, les courroies de la première section 9 peuvent être disposées de part et d'autre le long du dispositif 1, tandis que les courroies de la seconde section 10 sont positionnées intérieurement, ou inversement, ou encore les courroies respectives des sections 9,10 peuvent être positionnées les unes entre les autres, une sur deux ou une sur trois, etc. (i.e. chaque courroie 91 ou 101 d'une section 9 ou 10 comporte réciproquement à côté au moins une autre courroie 101 ou 91 d'une autre section 10 ou 9).

De plus, chaque courroie 91,101 est prévue solidaire en partie intérieure de sa section 9,10. En d'autres termes, chaque section 9,10 est fixée avec sa ou ses courroies 91,101 au niveau de sa face opposée à celle de réception des produits 2, à savoir que chaque tapis est fixé par le dessous avec sa ou ses courroies 91,101.

Selon d'autres modes de réalisation, les premier 90 et second 100 moyens d'enroulement peuvent se présenter sous forme d'au moins une chaîne ou crémaillère, de préférence plusieurs. Dès lors, les rouleaux d'entraînement respectifs 7 et 11 sont prévus complémentaires, afin d'assurer leur prise et leur entraînement.

Dès lors, la configuration du dispositif de convoyeur 1 selon plusieurs sections 9,10 distinctes et indépendantes, permet de véhiculer les produits à des vitesses différentes sur sa longueur, depuis la zone de chargement 3 ou un module amont vers le module aval 4.

En outre, cet unique convoyeur 1 à double section à deux vitesses, permet d'optimiser l'emprise au sol par rapport à plusieurs convoyeurs différents aboutés, rendant plus courte la ligne de production entre la zone de chargement 3 ou le module amont et le module situé en aval. En particulier, dans un exemple précis, l'invention permet de rendre plus compacte l'implantation d'un tel dispositif de convoyeur 1 entre un module débitant des produits prêts à fardeler en amont et une fardeleuse en aval, alimentée alors directement en plusieurs couloirs.

De façon préférée, le groupe 5 transféré sur la section 9, 10, a une dimension dans la direction longitudinale très proche de celle de ladite section. En particulier, le groupe 5 transféré et la position de la section lors du transfert sont tels que la distance qui sépare, d'une part, le bord le plus aval du groupe 5 transféré, et, d'autre part, le bord le plus en aval de la section qui le reçoit est faible, préférablement inférieure à la dimension d'une bouteille. Il en va de même pour la distance qui sépare, d'une part, le bord le plus en amont du groupe transféré et, d'autre part, le bord le plus en amont de la section qui le reçoit.

On comprend que la section circule le long d'un trajet courbe dans son extrémité en aval, de façon à effectuer le retour en position. Cette courbure crée une concavité avec l'extrémité amont du convoyeur où circulent ensuite les produits, cette extrémité étant elle aussi courbe. On peut envisager une plaque morte pour combler la concavité ainsi formée, et compter sur la poussée des produits amont sous l'effet de la section qui les déplace pour qu'ils poussent ceux sur la plaque morte jusqu'à ce qu'ils atteignent le convoyeur suivant.

Préférablement les parois délimitant les couloirs s'étendent au-dessus de la plaque morte. Concernant les parois délimitant les couloirs, celles-ci peuvent s'étendre au droit d'une partie du trajet des sections. On peut imaginer notamment que l'outil de transfert à multiple parois, lorsqu'il vient déposer les produits sur la section, termine son mouvement dans une position où ses parois arrivent en vis-à-vis des parois délimitant les couloirs de la machine en aval. Les produits circulent alors à tout moment dans des couloirs définis par des parois qui se suivent, ce qui élimine tout risque de création de quinconce.

L'invention concerne aussi un procédé de convoyage de produits 2 selon la revendication 6, dans lequel lesdits produits 2 circulent avec une configuration ordonnée.

Un tel procédé consiste à convoyer lesdits produits 2 depuis la zone de chargement 3 ou un module situé en amont, vers le module 4 situé en aval, au travers de la surface de réception 6.

Plus particulièrement, dans l'exemple de réalisation avec une zone de chargement 3, les produits 2 sont transférés par groupe depuis cette zone 3 vers la surface de réception 6 du convoyeur 1, au travers de moyens adaptés assurant leur transfert, notamment par glissement plan horizontal transversal, depuis une surface vers l'autre.

Avantageusement, ledit procédé se caractérise par le fait qu'on utilise une surface de réception 6 formée par une première section 9 et une seconde section 10 entraînées indépendamment et mobiles l'une par rapport à l'autre.

Dès lors, on arrête ladite première section 9 au niveau de ladite zone de chargement 3 ou du module amont et on transfère alors lesdits produits 2 par groupe depuis ladite zone de chargement 3 ou ledit module amont, tandis que ladite seconde section 10 est entraînée à une vitesse donnée et assure le déchargement des produits au niveau dudit module aval 4. Un exemple d'une telle étape est représenté sur la figure 2.

Ainsi, la section 9,10 arrêtée, ou quasi arrêtée, en vis-à-vis de la zone de chargement 3 minimise les risques de modification de la position des produits lors de leur transfert vers la surface de réception 6 constituée par cette section 9,10.

Ensuite, on accélère ladite première section 9 jusqu'à une vitesse supérieure à ladite vitesse donnée de ladite seconde section 10, jusqu'à ce que l'extrémité aval de ladite première section 9 vienne contre ou au plus proche de l'extrémité amont de ladite seconde section 10, de sorte à former alors une surface de convoyage la plus continue possible. Un exemple de ces deux étapes est représenté sur les figures 3 et 4.

On notera que l'accélération est calculée en fonction de la longueur du convoyeur 1, et plus particulièrement en fonction de la distance à parcourir par la première section pour rattraper la seconde, mais aussi par rapport au type de produits 2 transportés, afin de limiter les risques de changement de position au cours du passage depuis la position arrêtée de la section 9,10 et au travers des positions intermédiaires jusqu'à atteindre la vitesse d'entraînement souhaitée, directement derrière la seconde section.

Dès lors, on diminue la vitesse de la première section 9 jusqu'à atteindre la vitesse de ladite section 10, ou bien une vitesse légèrement supérieure afin d'assurer la parfaite jonction entre les bandes ou tapis constituant chacune desdites sections 9,10. En particulier, le ralentissement assure que la mise en contact des extrémités correspondantes des tapis des sections 9,10 s'effectue sans heurt, éventuellement préjudiciable à la conservation de l'agencement desdits produits 2. Cette décélération peut s'effectuer au moment de l'aboutement, avant ou après l'entrée en contact des extrémités respectives des sections 9,10.

Ainsi, le module en aval est alimenté en produits qui se suivent dans la direction longitudinale, préférablement avec plusieurs colonnes longitudinales l'une à cote de l'autre. Cette alimentation en continu est obtenue par le fait que les deux sections sont l'une derrière l'autre, sans espace entre elles. Le module en aval est donc alimenté en alternance par les produits de la première section, puis de la deuxième et ainsi de suite. Lorsque l'une des sections alimente la machine en aval, l'autre reçoit des produits puis accélère pour la rattraper, de sorte à délivrer des produits en continu à la machine en aval. On profite ainsi de la faible vitesse de l'alimentation en multi couloir du poste en aval pour rattraper jusqu'à l'annuler grâce à une vitesse plus élevée le jour qui se crée entre une section qui alimente à cette faible vitesse le module en aval et une autre section qui est à l'arrêt pour recevoir des produits transférés en groupe depuis le module en amont.

Comme évoqué précédemment, l'accélération et la décélération sont calculées afin de limiter au maximum les risques de changement de position ou de chute des produits 2 transportés par la section 9,10 correspondante.

En d'autres termes, comme visible sur la figure 4, les deux sections 9 et 10 ont alors approximativement la même vitesse de progression, une fois que la suivante a rattrapé la précédente.

Ainsi, il est possible de rattraper la seconde section qui est en cours de déchargement de ses produits 2, assurant la continuité du flux en approvisionnement desdits produits 2 ainsi transportés.

En particulier, après jonction, un léger bourrage des produits 2 peut être effectué, minimisant le décalage entre les produits 2 de tête amenés par la première section 9 et les produits 2 de queue portés par la seconde section 10, en aval. Ce bourrage peut être obtenu en assurant un convoyage amont, au niveau de la surface de réception 6, légèrement plus rapide que le convoyage aval, au niveau du module en aval.

De façon additionnelle, après déchargement des produits 2 au niveau dudit module aval 4 par ladite seconde section 10, on entraîne la seconde section 10 au moins le long du retour jusqu'à ladite zone de chargement 3 ou le module amont. A ce moment, la seconde section 10 est à vide, dépourvue de produit 2, se situant inférieurement, et peut donc être rapidement entraînée pour rejoindre le plus vite possible l'emplacement en face de la zone de chargement 3 ou du module amont. Un exemple d'une telle étape est représenté sur la figure 5.

Ensuite, on arrête ladite seconde section 10. Cette étape reprend le visuel de la figure 2.

En résumé, les sections 9,10 se suivent avec un écartement variable, d'une part, augmentant ou se creusant quand une section située en aval et chargée de produits 2 se déplace pour alimenter le module aval 4, tandis qu'une autre section est à l'arrêt en chargement au niveau de la zone 3 ou du module amont, ou, d'autre part, diminuant lorsque la section amont se déplace à une vitesse supérieure pour rejoindre l'autre section descendue à la vitesse nominale alors qu'elle approvisionne ledit module aval 4, ou, d'autre part encore, se creusant lors du retour inférieurement d'une section à vide jusqu'à la zone 3, alors que l'autre section décharge les produits 2 en approvisionnant ledit module aval 4.

On notera que, sur les figures 2 à 5, les flèches représentent schématiquement, sans valeur ou ratio précis mais uniquement de façon indicative, les vitesses de déplacement de chaque section 9 par rapport à l'autre 10.

En outre, les vitesses susmentionnées sont variables et déterminées de façon précise, en fonction de données inhérentes à la production et/ou au conditionnement de la ligne, par exemple, de façon non exhaustive, en fonction des produits 2 transportés, mais aussi de la longueur du dispositif 1, de la zone de chargement 3, ou encore de la cadence requise d'approvisionnement du module aval 4.

Ainsi de suite, les étapes précédentes peuvent alors être répétées, assurant l'approvisionnement en continu du module aval 4, alors que la surface de chargement 3 délivre des groupes de produits de façon discontinue.

En outre, les vitesses des différentes sections 9,10 dépendent de la vitesse nominale d'approvisionnement du module aval, mais aussi de la longueur entre ce module aval et la zone de chargement 3 ou le module amont. Ces vitesses de cheminement de sections 9,10 peuvent aussi être modifiées en vue de réguler l'approvisionnement de produits en fonction des cycles de production, notamment par rapport à un convoyeur équipant un module aval de type fardeleuse.

L'invention, au travers de son dispositif de convoyeur 1 et son procédé de convoyage, permet d'acheminer les produits 2 entre deux endroits d'une ligne de production et/ou de conditionnement, tout en assurant la conservation d'une configuration initiale sans quinconce, limitant les risques de changement de position. De plus, il est possible d'opérer une accumulation de produits au niveau de la zone de chargement 3, conférant un laps de temps plus important afin de les ordonner, s'ils ne le sont pas déjà. En tout état de cause, cette zone de chargement 3 offre une emprise réduite par rapport aux autres zones d'accumulation connues. De façon connexe, tout type d'approvisionnement de cette zone de chargement 3 est envisageable, afin d'amener les produits 2 et de les ordonner.

L'invention s'appliquera au convoyage de tout type de produits 2, pour un approvisionnement de produits à un module aval 4 possédant un seul ou plusieurs couloirs 42.

On obtient ainsi éventuellement un équipement intégral, comprenant
- une zone de chargement, de type surface rectangulaire, éventuellement déplaçable en continue selon en axe transversal
- une surface de réception, évoluant le long de cette surface rectangulaire à un premier bord longitudinal, à savoir horizontal et perpendiculaire à l'axe transversal ;
- un moyen d'alimentation par convoyage, circulant le long du bord longitudinal opposé
- et un module aval, type fardeleuse, alimenté par la surface de réception et donc dans son prolongement.

Les produits circulent sans quinconce dans tout cet équipement, et ils sont apportés dans la fardeleuse directement dans des couloirs distincts.

Comme il ressort de ce qui précède, le dispositif de convoyeur 1 comprend une surface de réception 6 destinée à supporter des produits 2. Cette surface 6 est de préférence essentiellement plane, voire plane et s'étend de préférence dans un plan essentiellement horizontal, voire horizontal, comme représenté dans les figures annexées. En d'autres termes les produits 2 sont supportés par une surface 6 essentiellement plane et essentiellement horizontale au cours de leur convoyage sur le dispositif de convoyeur 1. La surface de réception 6 est ainsi apte à accueillir une pluralité de produits 2 quel que soit le format des produits 2 à traiter et leur agencement sur cette surface 6. En effet, la surface 6 ne nécessite pas la présence d'éléments de maintien à l'image de parois verticales ou encore de réceptacles, également appelées godets.

Ce type d'éléments, outre le fait d'imposer un agencement particulier des produits 2 sur le dispositif 1, présente l'inconvénient d'être spécifique au moins aux dimensions des produits 2, voire à leur forme dans le cas des godets.

Un autre inconvénient de ces éléments de maintien réside dans le fait qu'ils imposent, de par leur disposition, la manière dont les produits doivent quitter la surface qui les supporte pour poursuivre leur parcours au sein de la ligne et notamment aller vers un module aval. En effet, à titre d'exemple, la présence de parois verticales transversales empêche toute sortie frontale des produits 2 alors que la présence de godets longitudinaux peut permettre une telle sortie des produits, mais que pour une ligne longitudinale de produits 2. De tels éléments occupent également une place considérable au sein d'un dispositif.

Ainsi, la surface 6 est préférentiellement dénuée d'éléments destinés à maintenir les produits 2 au cours de leur convoyage de type godet ou paroi verticale. Elle est donc avantageusement apte à recevoir des produits 2 de formes et de dimensions indifférentes, ces produits 2 étant ordonnés ou non. A titre d'exemple, elle peut supporter des produits 2 de base carrée ou triangulaire dont la hauteur est verticale ou non, ces produits 2 pouvant être disposés de manière aléatoire, sans ordonnancement sur cette surface 6.

Dans de tels modes de réalisation, la surface de réception 6 est donc la seule à garantir le positionnement et l'avancement des produits 2, exclusivement par adhérence.

En outre, dans de tels modes de réalisation, le convoyeur 1 est apte à délivrer de manière frontale les produits 2 qu'elle supporte sur un transporteur 41, prenant en principe également la forme d'un convoyeur, quel que soit l'agencement des produits 2 sur la surface de réception 6. Ainsi, aucun actionneur n'est nécessaire pour réaliser le transfert des produits 2 sur le transporteur 41 qui assure le déplacement des produits 2 vers la suite de la ligne de production et/ou de conditionnement. Les produits 2 sont simplement amenés vers le transporteur 41 du fait du fonctionnement du convoyeur 1. Le transporteur 41 se trouve alors dans le prolongement du convoyeur 1, sa surface de réception étant à fleur avec la surface de réception 6. Une plaque morte peut être envisagée entre les convoyeurs 1 et le transporteur 41 comme représenté en figures 2 à 5. En d'autres termes, les produits 2 passent du convoyeur 1 au transporteur 41 par convoyage longitudinal.

Il est à noter que le transporteur 41 peut circuler à une vitesse légèrement inférieure que celle de la section 9,10 lors du déchargement des produits 2 de sorte à compacter légèrement le flux de produits 2. En effet, il se peut que, notamment pour des raisons de sécurité, les extrémités aval et/ou amont de la section 9,10 ne supportent pas de produits 2. En effet, il est généralement préférable de disposer un produit 2 de moins sur la surface de réception 6 plutôt que de risquer d'engendrer une chute de ce produit 2 du fait par exemple qu'il ne repose pas intégralement sur ladite surface 6.

Ainsi, le dispositif 1 permet non seulement de convoyer des produits 2 en continu, indépendamment de leur format et de leur agencement sur la surface 6, mais il permet également d'amener simplement ces produits 2 vers la suite de la ligne.

Plus précisément, chaque section 9,10 indépendante de la surface 6 est figurée par une surface continue essentiellement plane, voire plane et qui s'étend de préférence dans un plan essentiellement horizontal, voire horizontal.

Cette surface continue est une surface apte à supporter des produits 2 sur l'ensemble de son étendue. Ainsi, une plaque comprend une surface supérieure continue, mais une plaque ajourée peut aussi comprendre une telle surface si les trous sont suffisamment petits pour ne pas être préjudiciables au support de produits 2.

La surface de réception 6 quant à elle, peut être alternativement continue et discontinue en fonction de l'étape en cours du procédé de convoyage. Ainsi, lors du chargement de la première section 9, la section 10 est en cours de déchargement et les deux sections sont donc espacées l'une de l'autre. Il en est de même lors du chargement de la seconde section 10. En revanche, une fois la première section 9 chargée, elle accélère pour rejoindre la seconde section 10 et former alors ensemble une surface de réception 6 continue, c'est-à-dire que les sections 9 et 10 sont à fleur et sans interstice entre ces deux sections. Il en est de même lorsque la seconde section 10 est chargée et a rejoint par son bord aval la première section 9 par son bord amont.

Il est à noter que préférentiellement, lors du transfert des produits 2 sur l'une des sections 9,10, notamment depuis une zone de chargement 3, l'ensemble des produits 2 à positionner sur l'une ou l'autre des sections 9,10 est transféré lors de l'arrêt de cette section 9,10. Ainsi, la section 9,10 à charger est arrêtée, l'ensemble des produits 2 à positionner dessus est transféré, notamment par poussée transversale, puis la section 9,10 chargée est remise à circuler. L'étape de chargement ne nécessite alors nullement la succession de plusieurs phases de marche-arrêt avec un transfert progressif des produits 2 lors de chaque période d'arrêt de la section 9,10. Il en résulte une cadence améliorée.

Selon des réalisations préférées de l'invention, la surface de réception 6 est alors essentiellement plane, s'étend dans un plan essentiellement horizontal et comporte au moins une première section 9 continue et une seconde section 10 continue, chacune apte à supporter une pluralité de produits 2, quel que soit l'agencement de ces produits 2.

Ainsi, le dispositif 1, du fait de sa surface de réception 6 essentiellement plane et essentiellement horizontale, est capable de déplacer un ensemble de produits 2 qui peuvent être disposés librement c'est-à-dire, aussi bien en vrac qu'en une ou plusieurs lignes, par exemple longitudinales, c'est-à-dire qui s'étend(ent) le long de la direction de convoyage du dispositif 1. Préférentiellement, les produits 2 sont agencés en plusieurs lignes longitudinales parallèles les unes par rapport aux autres, c'est-à-dire en matrice sans quinconce.

En outre, le dispositif 1, du fait de sa surface de réception 6 essentiellement plane et essentiellement horizontale, est capable de recevoir de produits 2 à l'aide d'un mouvement de poussée, et ce, notamment à partir d'une zone de chargement 3.

Comme il ressort de ce qui précède, et comme représenté aux figures 1 et 8 à 10, l'invention concerne selon un autre de ses aspects une installation comprenant au moins :
- une zone de chargement 3 telle que décrite précédemment, et
- un dispositif de convoyeur 1 selon la revendication 1.

De manière avantageuse, la zone de chargement 3 fait office de surface d'accumulation, c'est-à-dire, de surface tampon recevant des produits 2 qui transitent entre deux machines successives d'une ligne de production et/ou de conditionnement desdits produits 2. Une telle surface d'accumulation permet de gérer le flux de produits 2 qui circulent notamment entre deux machines et d'adapter ce flux en fonction des cadences respectives et des arrêts temporaires de ces machines de sorte à optimiser la cadence de la ligne.

La zone de chargement 3 jouxte en principe l'un des bords longitudinaux du dispositif 1 et se trouve à fleur de la surface de réception 6 de sorte que les produits 2 peuvent être transférés depuis la zone de chargement 3 jusque sur la surface de réception 6 par simple poussée latérale de direction transversale et essentiellement horizontale. Un tel transfert permet avantageusement de conserver un alignement longitudinal des produits 2.

La zone de chargement 3 est de préférence essentiellement plane, voire plane et s'étend de préférence dans un plan essentiellement horizontal, voire horizontal. Elle s'étend en principe depuis un bord amont vers un bord aval, le bord aval étant abouté avec la surface de réception 6. Les produits 2 supportés par cette surface 3 se déplacent vers le bord aval, c'est-à-dire notamment transversalement, voire essentiellement perpendiculairement à la direction dans laquelle s'étend le dispositif de convoyeur 1.

Selon une caractéristique additionnelle possible, l'installation comprend en outre un moyen de transfert destiné à transférer les produits 2 depuis la zone de chargement 3 jusque sur la surface de réception 6.

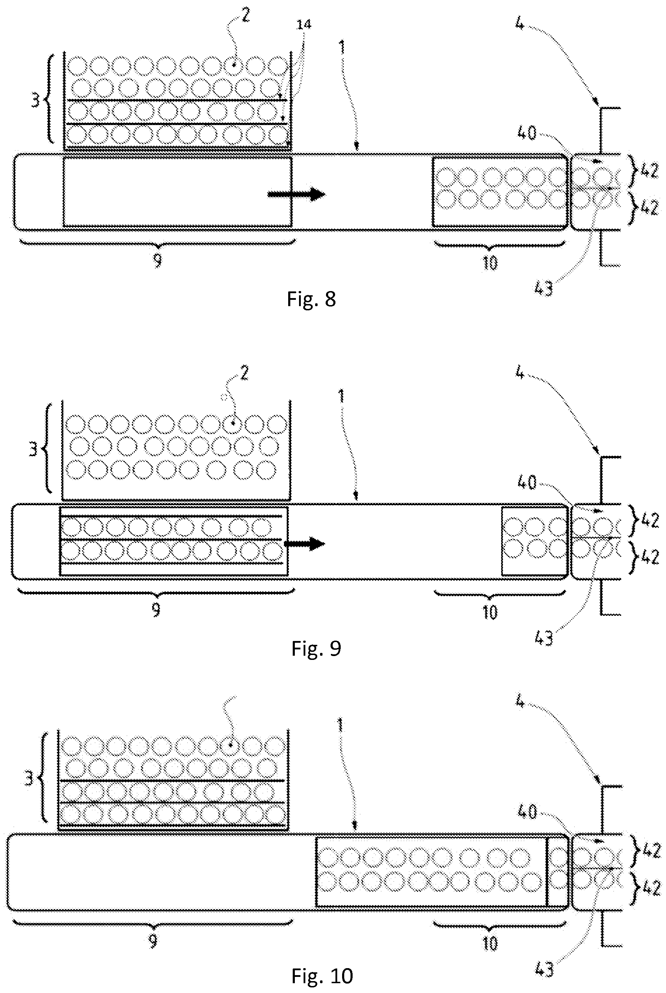

Un tel moyen de transfert peut notamment prendre la forme d'un moyen de poussée destiné à pousser un ou plusieurs segments longitudinaux de produits 2 par balayage transversal et essentiellement horizontal. En particulier un moyen de poussée destiné à transférer plusieurs segments longitudinaux de produits 2 simultanément, peut être apte à maintenir ces segments séparés pendant le balayage de sorte à conserver leur agencement en plusieurs segments, i.e. sans quinconce. Ainsi, comme indiqué précédemment et comme représenté aux figures 8 à 10, il peut comprendre une ou plusieurs plaques de poussée 14, le nombre de plaques 14 étant en corrélation avec le nombre de segments longitudinaux que contient le groupe 5 à transférer. A titre d'exemple, le moyen de poussée peut comprendre autant de plaques 14 que de lignes longitudinales constituant le groupe 5 à transférer. De manière alternative et préférée, le moyen de poussée comprend au moins n+1 plaques 14 lorsqu'il s'agit de transférer des groupes 5 de n segments longitudinaux de sorte que, lors du transfert, chaque segment se trouve entre deux plaques 14. L'espacement entre les plaques 14 peut être réglable de sorte à pouvoir traiter aisément divers formats de produits sans générer d'outil supplémentaire. Il est à noter que toutes les plaques 14 ne sont pas forcément utilisées lors d'un transfert. Ainsi, à titre d'exemple, un même moyen de transfert peut être utilisé aussi bien pour faire circuler des produits 2 selon trois lignes longitudinales que selon cinq lignes longitudinales au niveau du convoyeur 1, permettant ainsi l'utilisation du même moyen de transfert sans effectuer de réglage pour différentes configurations au niveau du convoyeur 1. Simplement, deux plaques de poussée 14 ne seraient pas utilisées lors d'un transfert simultané de trois lignes dans ce cas.

Selon une caractéristique additionnelle possible, l'installation comprend en outre un moyen d'alimentation par convoyage destiné à alimenter la zone de chargement. Un tel moyen d'alimentation s'étend notamment depuis la sortie d'un module amont, de type étiqueteuse ou boucheuse par exemple, jusqu'au niveau de la zone de chargement 3 au niveau de son bord amont. Les produits 2 circulent en principe selon une ou plusieurs files sur ce moyen d'alimentation, de préférence, selon une unique file.

Préférablement, au moins une portion, notamment la portion aval d'un tel moyen d'alimentation s'étend longitudinalement et longe la surface de chargement 3 au niveau de son bord amont. La surface supérieure du moyen d'alimentation qui supporte les produits 2 est en principe essentiellement plane, voire plane, et s'étend de préférence dans un plan essentiellement horizontal, voire horizontal. La surface supérieure de la portion du moyen d'alimentation qui longe la surface d'alimentation est de préférence à fleur de cette surface et aboutée à celle-ci, c'est-à-dire qu'il n'y a pas d'interstice entre les deux surfaces.

Ainsi les produits 2 peuvent être transférés depuis le convoyeur d'alimentation vers la zone de chargement 3 à l'aide d'un moyen de transfert du même type que celui décrit ci-dessus et destiné à transférer les produits 2 depuis la zone de chargement 3 jusque sur la surface de réception 6. Le moyen de transfert utilisé pour transférer les produits 2 depuis la zone de chargement 3 jusque sur la surface de réception 6 peut être par exemple également utilisé pour le transfert des produits sur la zone de chargement 3.

De manière avantageuse le moyen de transfert destiné à transférer les produits 2 depuis la zone de chargement 3 jusque sur la surface de réception 6 est également un moyen de poussée comme décrit ci-dessus de sorte à conserver l'alignement longitudinal des produits 2.

Selon une caractéristique additionnelle possible, l'installation comprend en outre le module aval 4.

De manière avantageuse, l'installation permet de convoyer des produits 2 d'un module amont de type boucheuse ou étiqueteuse par exemple, vers un module aval 4, par exemple, de type fardeleuse ou encaisseuse, en tirant profit d'une zone de chargement 3 ou surface d'accumulation pour agencer les produits 2 selon une ou plusieurs lignes parallèles et en tirant profit du dispositif de convoyeur 1 pour permettre une alimentation selon plusieurs couloirs en continu, c'est-à-dire sans générer d'espace supplémentaire entre les produits consécutifs, du module aval 4.

Ainsi, dans certains modes de réalisation, l'installation permet de transformer un flux unifilaire de produits 2 en un flux multifilaire agencé en plusieurs colonnes parallèles, le nombre de colonnes étant déterminé en fonction de la configuration des lots que l'on souhaite former dans le module aval 4 et en fonction de la capacité du moyen de transfert.

Il est à noter que le flux de produits 2 en entrée et en sortie d'une telle installation est continu bien que les transferts des produits 2 pour entrer et quitter la zone de chargement 3 sont réalisés de manière séquentielle. Ces transferts permettent à la fois la transformation d'un flux unifilaire à un flux multifilaire mais également d'accumuler des produits 2.

Une telle installation se différencie ainsi d'une installation classique notamment en ce que la zone de chargement 3 et le convoyeur 1 remplacent avantageusement la succession, entre le module amont 3 et le module aval 4, d'un dégroupeur (permettant de passer d'un flux unifilaire à un flux en vrac plus large), d'une surface d'accumulation en vrac de produits, puis d'un dispositif de mise en couloirs des produits.

En effet la succession connue dégroupeur-accumulation en vrac-mise en couloirs est particulièrement dispendieuse, occupe une grande surface au sol (du fait de la nécessité de toute une série de convoyeurs successifs), génère des blocages de produits au niveau de la mise en couloirs et n'est pas compatible avec une large gamme de dimensions de produits.

A contrario, l'installation proposée est compacte, économique, multi-formats et permet une circulation fluide des produits 2.

Comme illustré dans les figures 8 à 10, les produits 2 peuvent être agencés sous forme de segments longitudinaux côte à côte dans la direction transversale et peuvent être transférés comme tel sur la surface de réception 6.

Pour ce faire, le moyen de transfert utilisé comporte une ou plusieurs plaques de poussée 14 pour transférer, selon un mouvement de balayage transversal essentiellement horizontal, le nombre souhaité de lignes de produits 2 sur la première section 9 de la surface de réception 6 qui est alors à l'arrêt. A titre d'exemple, le moyen de transfert représenté aux figures 8 à 10 comprend 3 plaques 14 longitudinales, de sorte à transférer deux segments de produits 2 simultanément. De manière générale, les groupes 5 transférés comprennent le même nombre de lignes que dans les lots à former dans le module aval 4.

Ainsi, la figure 8 représente une installation dans laquelle le moyen de transfert est positionné pour transférer un groupe 5 de produits 2 sur la première section 9 de la surface de réception 6 alors que la seconde section 10 est en train de décharger un groupe 5 de produits 2 au niveau du module aval 4 qui se situe dans le prolongement aval du dispositif 1.

La figure 9 schématise la situation une fois le groupe 5 transféré sur la première section 9. Le moyen de transfert est encore au niveau du groupe 5, prêt à être escamoté. La première section 9 est toujours à l'arrêt et la seconde section 10 poursuit le déchargement de produits 2 au niveau du module aval 4. On constate également que les produits 2 restant sur la zone de chargement 3 ont avancé transversalement vers le bord aval de la zone de chargement. Cette avancée peut notamment être opérée du fait que la zone de chargement constitue la surface supérieure d'un moyen de convoyage qui circule transversalement.

Le moyen de transfert s'escamote alors et se positionne en vue de transférer un nouveau groupe 5 de produits 2 sur la surface de réception 6, plus précisément sur la seconde section 10 de cette surface 6.

Ainsi, la figure 10 représente la situation dans laquelle le moyen de transfert est en cours de positionnement pour transférer un groupe de produits 5 vers la seconde section 10. Sur cette figure, la seconde section 10 n'est pas encore au niveau de la surface de chargement 3, donc le transfert ne peut pas encore avoir lieu. La seconde section 10 termine le déchargement des produits 2 au niveau du module aval 4. Une fois le déchargement terminé, la seconde section pourra accélérer pour se positionner au niveau de la zone de chargement 3 en vue du transfert. Quant à la première section 9, elle a rejoint la seconde section 10, la surface de réception 6 formant alors une surface continue. Bien entendu, une installation dans laquelle les sections 9 et 10 ne sont pas aboutées mais légèrement espacées, à ce stade du procédé conviendrait également, et ce, d'autant plus si le module aval fonctionne de manière séquentielle, à l'image d'un palettiseur par exemple, et non continue.

## Revendications

1. Dispositif de convoyeur (1), comprenant une surface de réception (6) de produits (2) s'étendant au moins en partie longitudinalement, le long d'un trajet en boucle fermée, lesdits produits (2) étant des contenants, de type bouteilles, flacons ou bidons, dans lequel
- ladite surface de réception (6) comporte au moins une première section (9) et une seconde section (10) entraînées indépendamment et qui se suivent dans la direction longitudinale d'avance ;
- ladite première section (9) s'étendant selon une première partie de la longueur de ladite surface (6), entraînée au travers de premiers moyens de motorisation ;
- ladite seconde section (10) s'étendant selon une seconde partie de la longueur de ladite surface (6), distincte de ladite première partie, entraînée au travers de seconds moyens de motorisation, **caractérisé en ce que**
chaque section (9,10) étant constituée par une bande ou tapis de longueur finie et chaque section (9,10) indépendante de la surface (6) étant figurée par une surface continue essentiellement plane, voire plane et qui s'étend de préférence dans un plan essentiellement horizontal, voire horizontal.

2. Dispositif de convoyeur (1) selon la revendication 1, **caractérisé par le fait que** lesdits premiers moyens de motorisation se présentent sous forme d'au moins un premier rouleau d'entraînement (7) et d'au moins un rouleau de renvoi (8), ladite première section (9) comprenant des premiers moyens d'enroulement au niveau d'une première extrémité au moins autour dudit premier rouleau d'entraînement (7) et au niveau d'une seconde extrémité au moins autour dudit rouleau de renvoi (8).

3. Dispositif de convoyeur (1) selon l'une quelconque des revendications 1 ou 2, **caractérisé par le fait que** lesdits seconds moyens de motorisation comprennent au moins un second rouleau d'entraînement (11), ladite seconde section comprenant des seconds moyens d'enroulement au niveau d'une de ses extrémités au moins autour dudit second rouleau d'entraînement (11).

4. Dispositif de convoyeur (1) selon la revendication 3, **caractérisé par le fait que** lesdits seconds moyens d'enroulement de ladite seconde section sont montés en enroulement autour dudit rouleau de renvoi (8) des premiers moyens de motorisation.

5. Dispositif de convoyeur selon la revendication 2 et selon l'une quelconque des revendications 3 ou 4, **caractérisé par le fait que** lesdits premiers et seconds moyens d'enroulement se présentent sous la forme d'au moins une courroie en prise réciproquement avec ledit premier rouleau d'entraînement (7) et ledit second rouleau d'entraînement (11), chaque courroie étant solidaire en partie intérieure respectivement d'une des sections (9,10).

6. Procédé de convoyage de produits (2) pour la mise en œuvre du dispositif selon l'une des revendications 1 à 5, dans lequel lesdits produits (2) sont des contenants, de type bouteilles, flacons ou bidons et sont agencés selon une position ordonnée, consistant à :
- convoyer lesdits produits (2) depuis une zone de chargement (3) ou un module situé en amont, vers un module situé en aval (4), au travers d'une surface de réception (6) ;
- on arrête ladite première section (9) au niveau de ladite zone de chargement (3) ou du module amont et on transfère lesdits produits (2) depuis ladite zone de chargement (3) ou ledit module amont, tandis que ladite seconde section (10) est entraînée à une vitesse donnée et assure le déchargement des produits (2) au niveau dudit module aval (4) ;
- on accélère ladite première section (9) jusqu'à une vitesse supérieure à ladite vitesse donnée de ladite seconde section (10), jusqu'à ce que l'extrémité aval de ladite première section (9) atteigne l'extrémité amont de ladite seconde section (10),
- ledit transfert étant un transfert transversal d'un groupe (5) de produits, depuis ladite zone de chargement (3) vers l'une desdites sections (9,10), ledit groupe (5) présentant au moins un voire au moins deux segments longitudinaux comprenant chacun plusieurs produits.

7. Procédé de convoyage selon la revendication 6, **caractérisé en ce que** lorsque la seconde section (10) atteint la première, on décélère ladite première section (9) jusqu'à ladite vitesse de ladite seconde section (10).

8. Procédé de convoyage selon l'une quelconque des revendications 6 ou 7, **caractérisé en ce qu'**il comprend une étape d'alimentation du module en aval (4) par l'arrivée successive et en continue des sections (9, 10).

9. Procédé de convoyage selon l'une quelconque des revendications 6 à 8, **caractérisé en ce que**, après déchargement des produits (2) au niveau dudit module aval (4) par ladite seconde section (10), on entraîne la seconde section (10) le long du retour jusqu'à ladite zone de chargement (3) ou le module amont et on arrête ladite seconde section (10).

10. **Procédé** de convoyage selon l'une quelconque des revendications 6 à 9, **caractérisé en ce qu'**il comprend faire circuler les produits dans des couloirs longitudinaux séparés délimités par des parois suite à leur transfert vers l'une des sections (9,10).

## Patentansprüche

1. Fördervorrichtung (1), welche eine Aufnahmefläche (6) für Produkte (2) umfasst, die sich wenigstens teilweise in Längsrichtung entlang eines Weges in geschlossener Schleife erstreckt, wobei die Produkte (2) Behälter von der Art von Flaschen, Flakons oder Kanistern sind, wobei
- die Aufnahmefläche (6) mindestens einen ersten Abschnitt (9) und einen zweiten Abschnitt (10) aufweist, die unabhängig angetrieben werden und die in der Längslaufrichtung aufeinander folgen;
- der erste Abschnitt (9) sich entlang eines ersten Teils der Länge der Fläche (6) erstreckt, der über erste Motorisierungsmittel angetrieben wird;
- der zweite Abschnitt (10) sich entlang eines zweiten Teils der Länge der Fläche (6) erstreckt, der von dem ersten Teil verschieden ist und über zweite Motorisierungsmittel angetrieben wird, **dadurch gekennzeichnet, dass**
jeder Abschnitt (9, 10) aus einem Band oder Laufband von endlicher Länge besteht und jeder unabhängige Abschnitt (9, 10) der Fläche (6) von einer durchgehenden Fläche dargestellt wird, die im Wesentlichen eben oder sogar eben ist und die sich vorzugsweise in einer im Wesentlichen horizontalen oder sogar horizontalen Ebene erstreckt.

2. Fördervorrichtung (1) nach Anspruch 1, **dadurch gekennzeichnet, dass** die ersten Motorisierungsmittel die Form mindestens einer ersten Antriebsrolle (7) und mindestens einer Umlenkrolle (8) aufweisen, wobei der erste Abschnitt (9) erste Mittel zum Wickeln an einem ersten Ende wenigstens um die erste Antriebsrolle (7) und an einem zweiten Ende wenigstens um die Umlenkrolle (8) umfasst.

3. Fördervorrichtung (1) nach einem der Ansprüche 1 oder 2, **dadurch gekennzeichnet, dass** die zweiten Motorisierungsmittel mindestens eine zweite Antriebsrolle (11) umfassen, wobei der zweite Abschnitt zweite Mittel zum Wickeln an einem seiner Enden wenigstens um die zweite Antriebsrolle (11) umfasst.

4. Fördervorrichtung (1) nach Anspruch 3, **dadurch gekennzeichnet, dass** die zweiten Mittel zum Wickeln des zweiten Abschnitts in Wicklung um die Umlenkrolle (8) der ersten Motorisierungsmittel angebracht sind.

5. Fördervorrichtung nach Anspruch 2 und nach einem der Ansprüche 3 oder 4, **dadurch gekennzeichnet, dass** die ersten und zweiten Mittel zum Wickeln die Form mindestens eines Riemens aufweisen, der mit der ersten Antriebsrolle (7) und der zweiten Antriebsrolle (11) im gegenseitigen Eingriff steht, wobei jeder Riemen jeweils mit einem der Abschnitte (9, 10) im inneren Teil fest verbunden ist.

6. Verfahren zum Fördern von Produkten (2) für den Einsatz der Vorrichtung nach einem der Ansprüche 1 bis 5, wobei die Produkte (2) Behälter von der Art von Flaschen, Flakons oder Kanistern sind und gemäß einer geordneten Position angeordnet sind, aus Folgendem bestehend:
- Fördern der Produkte (2) von einem Beschickungsbereich (3) oder einem vorgelagerten Modul aus zu einem nachgelagerten Modul (4) hin über eine Aufnahmefläche (6);
- der erste Abschnitt (9) wird an dem Beschickungsbereich (3) oder dem vorgelagerten Modul gestoppt, und die Produkte (2) werden von dem Beschickungsbereich (3) oder dem vorgelagerten Modul aus verlagert, während der zweite Abschnitt (10) mit einer gegebenen Geschwindigkeit angetrieben wird und die Entnahme der Produkte (2) an dem nachgelagerten Modul (4) sicherstellt;
- der erste Abschnitt (9) wird auf eine Geschwindigkeit beschleunigt, die höher als die gegebene Geschwindigkeit des zweiten Abschnitts (10) ist, bis das nachgelagerte Ende des ersten Abschnitts (9) das vorgelagerte Ende des zweiten Abschnitts (10) erreicht,
- wobei die Verlagerung eine Querverschiebung einer Gruppe (5) von Produkten von dem Beschickungsbereich (3) zu einem der Abschnitte (9, 10) ist, wobei die Gruppe (5) mindestens einen oder sogar mindestens zwei Längsabschnitte aufweist, die jeweils mehrere Produkte umfassen.

7. Förderverfahren nach Anspruch 6, **dadurch gekennzeichnet, dass**, wenn der zweite Abschnitt (10) den ersten erreicht, der erste Abschnitt (9) auf die Geschwindigkeit des zweiten Abschnitts (10) verlangsamt wird.

8. Förderverfahren nach einem der Ansprüche 6 oder 7, **dadurch gekennzeichnet, dass** er einen Schritt der Versorgung des nachgelagerten Moduls (4) durch die aufeinander folgende und kontinuierliche Ankunft der Abschnitte (9, 10) umfasst.

9. Förderverfahren nach einem der Ansprüche 6 bis 8, **dadurch gekennzeichnet, dass** nach Entnahme der Produkte (2) an dem nachgelagerten Modul (4) durch den zweiten Abschnitt (10) der zweite Abschnitt (10) entlang der Rückkehr bis zu dem Beschickungsbereich (3) oder dem vorgelagerten Modul angetrieben wird und der zweite Abschnitt (10) gestoppt wird.

10. Förderverfahren nach einem der Ansprüche 6 bis 9, **dadurch gekennzeichnet, dass** es das Umlaufenlassen der Produkte, im Anschluss an ihre Verlagerung zu einem der Abschnitte (9, 10), in getrennten Längsgängen umfasst, die durch Wände begrenzt sind.

## Claims

1. Conveyor device (1), comprising a surface (6) for receiving products (2) extending at least in part longitudinally, along a closed loop path, said products (2) being containers, of bottle, flask or can type, in which
- said receiving surface (6) has at least a first section (9) and a second section (10) that are driven independently and follow one another in the longitudinal direction of forward movement;
- said first section (9) extending over a first part of the length of said surface (6), driven via first drive means;
- said second section (10) extending over a second part of the length of said surface (6), which is distinct from said first part, driven via second drive means,
**characterized in that**
each section (9, 10) is constituted by a band or strip of finite length and each independent section (9, 10) of the surface (6) is an essentially flat, or even flat, continuous surface that preferably lies in an essentially horizontal, or even horizontal, plane.

2. Conveyor device (1) according to Claim 1, **characterized in that** said first drive means are in the form of at least one first drive roller (7) and at least one return roller (8), said first section (9) comprising first means for winding at a first end at least around said first drive roller (7) and at a second end at least around said return roller (8).

3. Conveyor device (1) according to either one of Claims 1 and 2, **characterized in that** said second drive means comprise at least one second drive roller (11), said second section comprising second means for winding at one of its ends at least around said second drive roller (11).

4. Conveyor device (1) according to Claim 3, **characterized in that** said second winding means of said second section are mounted wound around said return roller (8) of the first drive means.

5. Conveyor device according to Claim 2 and according to either one of Claims 3 and 4, **characterized in that** said first and second winding means are in the form of at least one belt engaged reciprocally with said first drive roller (7) and said second drive roller (11), each belt being secured to the inner part, respectively, of one of the sections (9, 10).

6. Method of conveying products (2) for implementing the device according to one of Claims 1 to 5, in which said products (2) are containers, of bottle, flask or can type, and are arranged in an ordered position, consisting in:
- conveying said products (2) from a loading zone (3) or a module situated upstream, to a module situated downstream (4), via a receiving surface (6);
- said first section (9) is stopped at said loading zone (3) or the upstream module and said products (2) are transferred from said loading zone (3) or said upstream module, while said second section (10) is driven at a given speed and offloads the products (2) at said downstream module (4);
- said first section (9) is accelerated to a speed higher than said given speed of said second section (10), until the downstream end of said first section (9) reaches the upstream end of said second section (10),
- said transfer being a transverse transfer of a group (5) of products, from said loading zone (3) to one of said sections (9, 10), said group (5) having at least one or even at least two longitudinal segments each comprising a plurality of products.

7. Conveying method according to Claim 6, **characterized in that**, when the second section (10) reaches the first, said first section (9) is decelerated to said speed of said second section (10).

8. Conveying method according to either one of Claims 6 and 7, **characterized in that** it comprises a step of feeding the downstream module (4) by the successive and continuous arrival of the sections (9, 10).

9. Conveying method according to any one of Claims 6 to 8, **characterized in that**, after offloading of the products (2) at said downstream module (4) by said second section (10), the second section (10) is driven along the return as far as said loading zone (3) or the upstream module and said second section (10) is stopped.

10. Conveying method according to any one of Claims 6 to 9, **characterized in that** it comprises causing the products to circulate in separate longitudinal corridors delimited by walls following their transfer to one of the sections (9, 10).
